(19) Europäisches Patentamt / European Patent Office / Office européen des brevets

(11) **EP 2 933 608 A1**

(12) **EUROPEAN PATENT APPLICATION**

(43) Date of publication:
21.10.2015 Bulletin 2015/43

(51) Int Cl.:
**G01C 25/00** (2006.01)  **G01P 15/125** (2006.01)
**G01P 15/18** (2013.01)  **G01P 21/00** (2006.01)

(21) Application number: 15160535.9

(22) Date of filing: 24.03.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 16.04.2014 JP 2014084893

(71) Applicant: Fuji Electric Co., Ltd.
Kawasaki-shi 210-9530 (JP)

(72) Inventors:
• Kakinuma, Minoru
  Kawasaki-shi 210-9530 (JP)
• Nakamura, Satoru
  Kawasaki-shi, 210-9530 (JP)

(74) Representative: Appelt, Christian W.
Boehmert & Boehmert
Anwaltspartnerschaft mbB
Patentanwälte Rechtsanwälte
Pettenkoferstrasse 20-22
80336 München (DE)

(54) **Sensitivity inspection system and sensitivity inspection method**

(57) A sensitivity inspection system 2000 is a system inspecting the sensitivity of an electrostatic capacitance sensor 10 detecting acceleration in each of a plurality of directions. An output acquisition unit 2020 acquires an output based on capacitance in each of the first and second directions from the electrostatic capacitance sensor 10 made inclined to be brought in an inspection state. Each of a first conversion unit 2040 and a second conversion unit 2060 converts the value of the output of the electrostatic capacitance sensor 10 in its own one of the first and second directions to the value of a converted output, which is equivalent to the value of the output when a reference acceleration is applied, by using the ratio of the theoretical value of the output of the electrostatic capacitance sensor 10 based on the value of the capacitance when the reference acceleration is applied to the theoretical value of the output of the electrostatic capacitance sensor 10 based on the value of the capacitance when acceleration is applied in the inspection state. This reduces the cost required for adjusting the sensitivity of the electrostatic capacitance sensor 10.

EP 2 933 608 A1

**Description**

BACKGROUND OF THE INVENTION

1. Field of the Invention

The present invention relates to a sensitivity inspection system inspecting the sensitivity of an electrostatic capacitance sensor that detects acceleration and to a sensitivity inspection method.

2. Background Art

For an acceleration detection device that detects acceleration, a capacitance type device (hereinafter referred to as an electrostatic capacitance sensor) is provided as is described in JP-A-2006-153754, for example. The electrostatic capacitance sensor has a fixed electrode arranged in proximity to a movable electrode to detect variation in the capacitance between the fixed electrode and the movable electrode, thereby detecting acceleration.

In general, due to differences in characteristics among individual parts caused in fabricating them, scatters are exhibited between the outputs of fabricated acceleration detection devices. Thus, for eliminating such scatters in the outputs, a sensitivity adjustment of each of the acceleration detection devices is carried out prior to shipping. Related art with respect to the sensitivity adjustment of such an acceleration detection device is disclosed in each of JP-A-2006-153754, JP-A-9-251031, 2006/16671A, JP-A-2004-093552 and JP-A-8-240611. Each of JP-A-2006-153754 and JP-A-9-251031 discloses that the sensitivity of an acceleration detection device is adjusted by using a shaker. Each of International Disclosure No.2006/16671, JP-A-2004-093552 and JP-A-8-240611 discloses that a sensitivity adjustment is carried out in an acceleration detection device that detects the acceleration in each of a plurality of directions with the gravitational acceleration applied to a plurality of the directions at one time by placing an acceleration detection device as an object of inspection while the device being made inclined.

Patent Document 1: JP-A-2006-153754
Patent Document 2: JP-A-9-251031
Patent Document 3: International Disclosure No.2006/16671
Patent Document 4: JP-A-2004-093552
Patent Document 5: JP-A-8-240611

The inventor studied the related art from the view point of the reduction of the cost required for the sensitivity adjustment of an electrostatic capacitance sensor detecting the acceleration in each of a plurality of directions. In the sensitivity adjustment disclosed in each of JP-A-2006-153754 and JP-A-9-251031, the use of a shaker for the sensitivity adjustment increases fabrication cost of the system used for the sensitivity adjustment. In the sensitivity adjustment disclosed in International Disclosure No.2006/16671, the adjustment is carried out by "determining the reference point of the outputted data on the basis of the accumulated outputted data". This increases the number of times of measurements. In the calibration disclosed in JP-A-2004-093552, there is a limitation of setting the output of a sensor at unity when the acceleration of 1G is applied. This narrows the applicability of the calibration. In addition, in JP-A-8-240611, no specific calibration procedure is disclosed.

The invention was made with the situations described in the foregoing taken into consideration with an object of providing a technique that reduces a cost required for the sensitivity adjustment of an electrostatic capacitance sensor that detects acceleration in each of a plurality of directions.

SUMMARY OF THE INVENTION

The sensitivity inspection system according to the invention is a sensitivity inspection system inspecting the sensitivity of an electrostatic capacitance sensor. The electrostatic capacitance sensor is provided with a sensor unit, a detecting unit and a correcting unit. The sensor unit has a movable electrode, at least one first fixed electrode arranged to be opposite to the movable electrode from a first direction taken as the direction opposing the movable electrode, and a second fixed electrode arranged to be opposite to the movable electrode from a second direction included in a plane the direction thereof being different from the direction of the plane including the first direction. The detecting unit detects first capacitance between the movable electrode and the first fixed electrode and second capacitance between the movable electrode and the second fixed electrode. The correcting unit corrects the result of detection by the detecting unit and outputs the corrected result.

The sensitivity inspection system has an output acquisition unit, a first conversion unit and a second conversion unit. The output acquisition unit acquires a first output with the value thereof based on the value of the first capacitance and a second output with the value thereof based on the value of the second capacitance from the electrostatic capacitance sensor made inclined to be brought in an inspection state. The first conversion unit converts the first output to a first converted output with the value thereof equivalent to the value of the output when the first reference acceleration in the first direction is applied to the electrostatic capacitance sensor. The conversion is made by multiplying the value of the first output by a first ratio as the ratio of the theoretical value of the output of the electrostatic capacitance sensor based on the value of the first capacitance when the first reference acceleration as the acceleration in the first direction with a specified value is applied as the reference acceleration for the inspection to the theoretical value of the output of the electrostatic capacitance sensor based on the value of the first capacitance when the acceleration in the first direction is applied in the inspection state. The second conversion unit converts the second output to a second converted output with the value thereof equivalent to the value of the output when the second reference acceleration in the second direction is applied to the electrostatic capacitance sensor. The conversion is made by multiplying the value of the second output by a second ratio as the ratio of the theoretical value of the output of the electrostatic capacitance sensor based on the value of the second capacitance when the second reference acceleration as the acceleration in the second direction with a specified value is applied as the reference acceleration for the inspection to the theoretical value of the output of the electrostatic capacitance sensor based on the value of the second capacitance when the acceleration in the second direction is applied in the inspection state.

The sensitivity inspection method according to the invention is a sensitivity inspection method inspecting the sensitivity of an electrostatic capacitance sensor. The electrostatic capacitance sensor is provided with a sensor unit, a detecting unit and a correcting unit. The sensor unit has a movable electrode, at least one first fixed electrode arranged to be opposite to the movable electrode from a first direction taken as the direction opposing the movable electrode, and a second fixed electrode arranged to be opposite to the movable electrode from a second direction included in a plane the direction thereof being different from the direction of the plane including the first direction. The detecting unit detects first capacitance between the movable electrode and the first fixed electrode and second capacitance between the movable electrode and the second fixed electrode. The correcting unit corrects the result of detection by the detecting unit and outputs the corrected result.

The sensitivity inspection method includes the steps of making the electrostatic capacitance sensor inclined to be brought in an inspection state, acquiring a first output with the value thereof based on the value of the first capacitance and a second output with the value thereof based on the value of the second capacitance from the electrostatic capacitance sensor, converting the first output to a first converted output with the value thereof corresponding to the value of the output when the first reference acceleration in the first direction is applied to the electrostatic capacitance sensor by multiplying the value of the first output by a first ratio as the ratio of the theoretical value of the output of the electrostatic capacitance sensor based on the value of the first capacitance when the first reference acceleration as the acceleration in the first direction with a specified value is applied as the reference acceleration for the inspection to the theoretical value of the output of the electrostatic capacitance sensor based on the value of the first capacitance when the acceleration in the first direction is applied in the inspection state, and converting the second output to a second converted output with the value thereof corresponding to the value of the output when the second reference acceleration in the second direction is applied to the electrostatic capacitance sensor by multiplying the value of the second output by a second ratio as the ratio of the theoretical value of the output of the electrostatic capacitance sensor based on the value of the second capacitance when the second reference acceleration as the acceleration in the second direction with a specified value is applied as the reference acceleration for the inspection to the theoretical value of the output of the electrostatic capacitance sensor based on the value of the second capacitance when the acceleration in the second direction is applied in the inspection state.

According to the invention, a technology is provided that reduces the cost required for the sensitivity adjustment of an electrostatic capacitance sensor that detects acceleration in each of a plurality directions.

BRIEF DESCRIPTION OF THE DRAWINGS

FIG. 1 is a block diagram showing an example of a sensitivity inspection system according to embodiment 1 of the invention;
FIG. 2 is a plan view showing an example of the configuration of the electrostatic capacitance sensor;
FIG. 3 is a cross sectional view taken along line A-A of FIG. 2;
FIG. 4 is a diagram showing an example of the circuit configuration of a detecting circuit detecting the value of the acceleration in the X direction or in the Y direction provided in the detecting unit in an example of the configuration of the electrostatic capacitance sensor;
FIG. 5 is a diagram showing an example of the circuit configuration of the detecting circuit detecting the value of the acceleration in the X direction or in the Y direction provided in the detecting unit in another example of the configuration of the electrostatic capacitance sensor;

FIG. 6 is a diagram showing an example of the circuit configuration of a detecting circuit detecting the value of the acceleration in the Z direction provided in the detecting unit in further another example of the configuration of the electrostatic capacitance sensor;

FIG. 7 is a diagram showing an example of the circuit configuration of a detecting circuit detecting the value of the acceleration in the Z direction provided in the detecting unit in still further another example of the configuration of the electrostatic capacitance sensor;

FIG. 8 is a perspective view showing the case of the electrostatic capacitance sensor in the standard state;

FIG. 9 is a side view in which the case of the electrostatic capacitance sensor shown in FIG. 8 brought into the inspection state is viewed from the Y direction in FIG. 8;

FIG. 10 is a graph showing a relationship between the acceleration a applied in the first direction of the electrostatic capacitance sensor and the output $\Delta C$ of the electrostatic capacitance sensor corresponding to the acceleration which relationship is obtained on the basis of a first theoretical formula;

FIG. 11 is a view showing the movement of the movable electrode when the acceleration in the X direction shown in FIG. 2 and FIG. 3 is applied to the movable electrode of the electrostatic capacitance sensor;

FIG. 12 is a view showing the movement of the movable electrode when the acceleration in the Z direction shown in FIG. 3 is applied to the movable electrode of the electrostatic capacitance sensor;

FIG. 13 is a block diagram showing an example of the hardware configuration of the sensitivity inspection system;

FIG. 14 is a flowchart showing an example of the flow of the processing executed by the sensitivity inspection system of the embodiment 1;

FIG. 15 is a block diagram showing an example of a sensitivity inspection system according to embodiment 2 of the invention;

FIG. 16 is a flowchart showing an example of the flow of the processing executed by the sensitivity inspection system of the embodiment 2 of the invention;

FIG. 17 is a table showing examples of specifications which the sensor outputs of the electrostatic capacitance sensor are required to meet;

FIG. 18 is a perspective view showing a setting stand for setting the electrostatic capacitance sensor; and

FIG. 19 is a view showing an example of a state in which the electrostatic capacitance sensor is set on the setting stand.

DESCRIPTION OF THE PREFERRED EMBODIMENT

In the following, embodiments of the invention will be explained with the use of attached drawings. In all of the drawings, similar components are denoted with similar reference numerals and signs with the explanations thereof appropriately omitted.

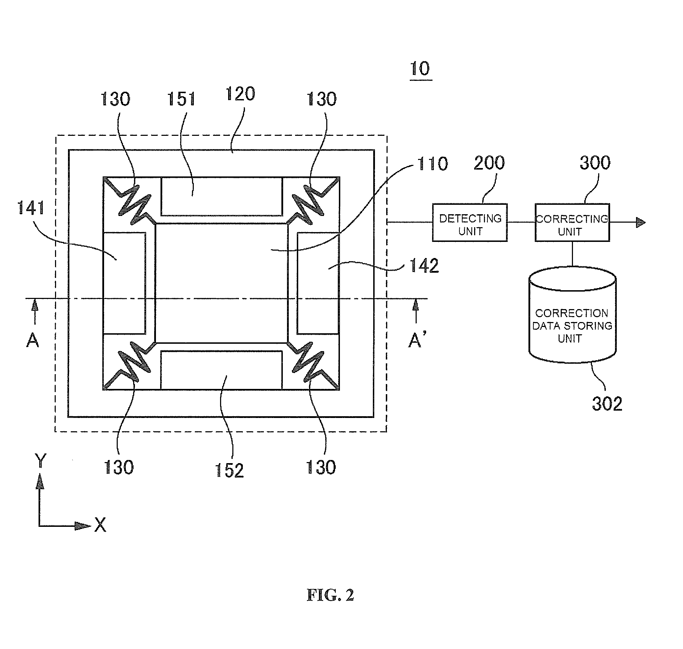

In addition, in the following explanations, each of the components of a detecting unit 200 and a correcting unit 300 that will be shown later in FIG. 2 is not shown as a block formed as a hard ware unit but is shown as a block formed as a functional unit. Each of the detecting unit 200 and the correcting unit 300 is actualized by an arbitrary combination of hardware and software with central constituents of a CPU of an arbitrary computer, a memory, programs loaded in the memory, storage media such as hard disks storing the programs and an interface for connection to a network. The detecting unit 200 and correcting unit 300 are actualized with variously modified examples.

[Embodiment 1]

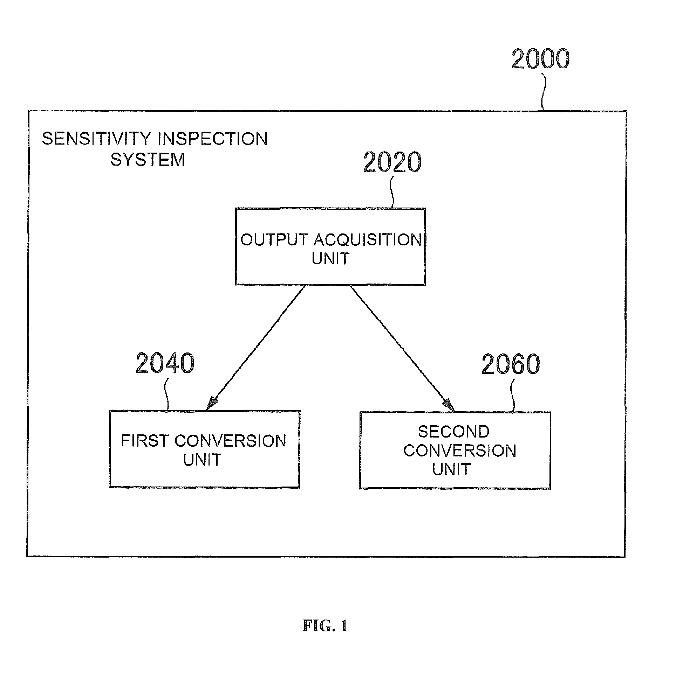

FIGURE 1 is a block diagram showing an example of a sensitivity inspection system 2000 according to embodiment 1 of the invention. In FIG. 1, arrows show flows of information. Moreover, in FIG. 1, each block represents a functional unit rather than a hardware unit.

The sensitivity inspection system 2000 is a system that inspects the sensitivity of an electrostatic capacitance sensor 10 that will be shown later in FIG. 2. The electrostatic capacitance sensor 10 carries out detection of the value of acceleration in each of a first direction and a second direction. Here, the direction of the plain including the first direction and the direction of the plain including the second direction are directions different from each other. For facilitating the understanding of the sensitivity inspection system 2000, an example of the configuration of the electrostatic capacitance sensor 10 as an object of the inspection will be explained prior to the explanation of the sensitivity inspection system 2000.

<Example of Configuration of Electrostatic capacitance sensor 10>

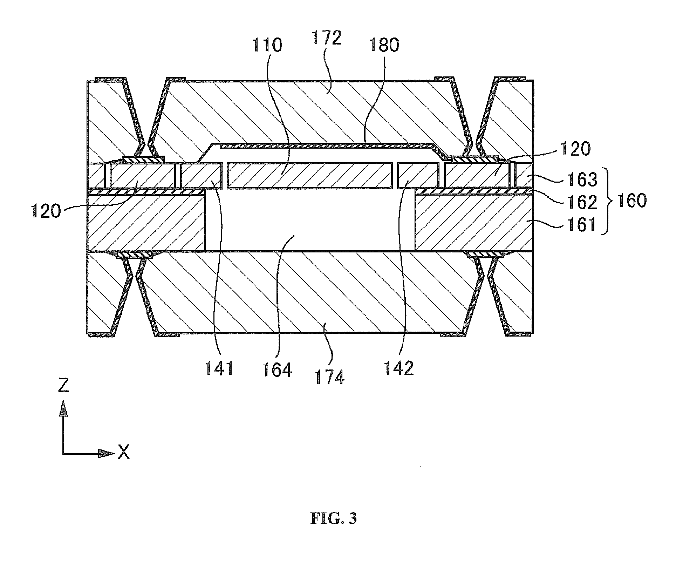

FIGURE 2 is a plan view showing an example of the configuration of the electrostatic capacitance sensor 10. FIGURE 3 is a cross sectional view taken along line A-A of FIG. 2. The electrostatic capacitance sensor 10 in the example is provided with a sensor unit provided with a movable electrode 110, a support 120, four beams 130, a pair of fixed electrodes 141 and 142, the detecting unit 200 and the correcting unit 300. Each of the beams 130 functions as a spring and attaches the movable electrode 110 to the support 120 in a movable state.

The movable electrode 110 is flat-plate-like with a rectangular plane figure. Opposite to a first side (edge) on the one side of the movable electrode 110, the fixed electrode 141 is arranged. Opposite to a side (a second side) on the other side of the movable electrode 110, the fixed electrode 142 is arranged. The fixed electrodes 141 and 142 are arranged at positions at which they are opposite to each other with the movable electrode 110 arranged in between and become axial symmetry with reference to a line passing the center of the movable electrode 110 and being in parallel to the first and second sides.

In the example shown in FIG. 2, each of the sides of the movable electrode 110 is formed to be linear. The sides, however, may be formed in comb-shaped electrode. In this case, each of the sides of the fixed electrodes 141 and 142 opposite to the movable electrode 110 is also formed in comb-shaped electrode and is arranged so that each tooth is positioned in its own space between two of the teeth of the movable electrode 110 without being brought into contact therewith.

The support 120 is provide so as to surround the four sides of the movable electrode 110. In detail, the support 120 has a rectangular opening. Each of the four sides of the opening is in parallel with its own one of the four sides of the movable electrode 110. In addition, four of the beams 130 are provided. Each of the beams 130 is attached to its own corner of the movable electrode 110 with one end and is attached to its own corner of the opening of the support 120 with the other end. The arrangement of the beams 130, however, is not limited to the arrangement in the example shown in FIG. 2.

The electrostatic capacitance sensor 10 is further provided with a pair of fixed electrodes 151 and 152. The fixed electrode 151 is opposite to the third side of the movable electrode 110 and the fixed electrode 152 is opposite to the side as a fourth side opposing the third side of the movable electrode 110. At least one of a pair of the fixed electrodes 141 and 142 and a pair of the fixed electrodes 151 and 152 is provided as a first fixed electrode taking the direction opposing the movable electrode 110 as the first direction.

In FIG. 3, the sensor unit in the electrostatic capacitance sensor 10 is formed with the use of a SOI (Silicon On Insulator) substrate 160. The SOI substrate 160 is formed of a silicon supporting layer 161 of a bottom layer, a silicon oxide layer 162 formed on the silicon supporting layer 161 and an active silicon layer 163 formed on the silicon oxide layer 162. The silicon supporting layer 161 and the silicon oxide layer 162, except the sections surrounding the four sides of the movable electrode 110, are removed by etching. In this way, the silicon supporting layer 161 and the silicon oxide layer 162 are formed so as to have a space 164 in their central sections.

While, the active silicon layer 163 at the top is partially removed by anisotropic etching, for example. The partial removal causes the active silicon layer 163 to form the movable electrode 110 positioned in the central section, the beams 130 (elastic elements) each being extended outward on a diagonal from its own one of the four corners of the movable electrode 110, the fixed electrodes 141, 142, 151 and 152 each being arranged so as to be opposite to its own one of the four sides of the movable electrode 110 with a specified spacing held in between and the support 120.

The sensor unit in the electrostatic capacitance sensor 10 further has protective elements 172 and 174. The protective elements 172 and 174 are formed with the use of glass, for example. The protective element 172 covers the surface (top surface) of the surfaces of the SOI substrate 160, on which surface the movable electrode 110 is formed. While, the protective element 174 covers the bottom surface of the SOI substrate 160. Each of the protective elements 172 and 174 is provided so as to be apart from the movable electrode 110 and the components around it except the edge thereof. Of the surfaces of the protective element 172, on the surface opposite to the movable electrode 110, a fixed electrode 180 is formed. Namely, the fixed electrode 180 is opposite to the movable electrode 110 from the direction different from the directions from which the fixed electrodes 141, 142, 151 and 152 are opposite to the movable electrode 110. In other words, each of the fixed electrodes 141 and 142 is opposite to the movable electrode 110 from the first direction (the X direction in FIG. 2 and FIG. 3) as the first fixed electrode, each of the fixed electrodes 151 and 152 is opposite to the movable electrode 110 from another first direction (the Y direction in FIG. 2) as the first fixed electrode and the fixed electrode 180 is opposite to the movable electrode 110 from the second direction (the Z direction in FIG. 3) as a second fixed electrode. The second direction is a direction opposite to the top surface or the bottom surface of the movable electrode 110.

The detecting unit 200 shown in FIG. 2 detects the change in the capacitance between the movable electrode 110 and the fixed electrode 141 and the change in the value of the capacitance between the movable electrode 110 and the fixed electrode 142. The detected value is then outputted to the correcting unit 300 as the value of an output with respect to the X direction. Here, the structure for detecting the value of the X direction component of the acceleration applied to the movable electrode 110 is provided as a differential structure in which the movable electrode 110 in the neutral position is symmetrical in the X direction. This is for changing the capacitance between the movable electrode 110 and the fixed electrode 141 and the capacitance between the movable electrode 110 and the fixed electrode 142 in reverse to each other.

The detecting unit 200 also detects the change in the value of the capacitance between the movable electrode 110 and the fixed electrode 151 and the change in the value of the capacitance between the movable electrode 110 and the fixed electrode 152. The detected value is then outputted to the correcting unit 300 as the value of an output with respect to the Y direction. Here, the structure for detecting the value of the Y direction component of the acceleration applied to the movable electrode 110 is also provided as a differential structure in which the movable electrode 110 in the neutral position is symmetrical in the Y direction.

Further, the detecting unit 200 also detects the change in the value of the capacitance between the movable electrode 110 and the fixed electrode 180 shown in FIG. 3. The detected value is then outputted to the correcting unit 300 as the value of an output with respect to the Z direction. The structure for detecting the value of the Z direction component of the acceleration applied to the movable electrode 110 is provided as a structure being asymmetrical in the Z direction.

The electrostatic capacitance sensor 10 of the example detects the value of the acceleration in each of the three directions simultaneously. The electrostatic capacitance sensor 10, however, may have a sensor unit that detects the values of accelerations in the three or more directions or only in any two of the three directions simultaneously. Moreover, the electrostatic capacitance sensor 10 may have a plurality of sensor units while being combined each detecting the values of accelerations in any two directions only of the three directions or the value of acceleration in any one direction only. This enables the electrostatic capacitance sensor 10 to detect the value of acceleration in each of three or more directions simultaneously.

The correcting unit 300 outputs a value which is provided by multiplying the value of the output the value of outputted by the detecting unit 200 by a correction factor. Here, the value of the output of the detecting unit 200 with respect to the X direction, the value of the output of the detecting unit 200 with respect to the Y direction and the value of the output of the detecting unit 200 with respect to the Z direction can be made to have their respective correction factors determined which are different from one another. By determining an adequate value for the correction factor in each direction on the basis of the results of the sensitivity inspections of the electrostatic capacitance sensor 10, the value of the output of the electrostatic capacitance sensor 10 with respect to the acceleration in each direction can be provided so as to be within a correct range. The correction factors are supposed to be stored in a correction data storing unit 302 of the correcting unit 300 so as to be rewritable.

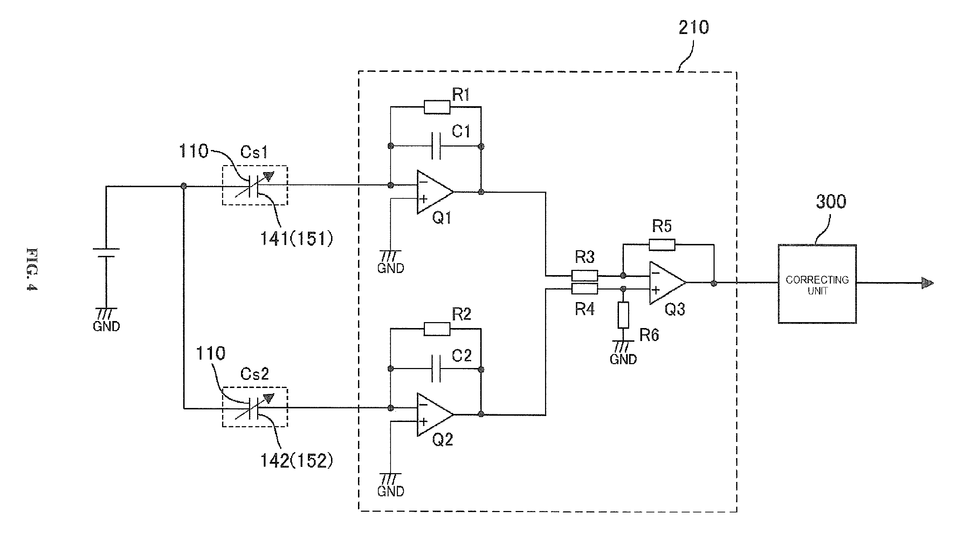

FIGURE 4 is a diagram showing an example of the circuit configuration of a detecting circuit 210 detecting the value of the acceleration in the X direction or in the Y direction provided in the detecting unit 200 in an example of the configuration of the electrostatic capacitance sensor 10. The detecting circuit 210 is connected to the fixed electrodes 141 and 142 for detecting the acceleration in the X direction. The detecting unit 200, in addition to the detecting circuit 210, has a circuit connected to the fixed electrodes 151 and 152 for detecting the acceleration in the Y direction. The circuit also has the same configuration as that of the detecting circuit 210.

To the movable electrode 110, a DC voltage is applied. The fixed electrode 141 is connected to the negative input terminal of a differential amplifier Q1 in the detecting circuit 210. The positive input terminal of the differential amplifier Q1 is grounded. Between the negative input terminal and the output terminal of the differential amplifier Q1, a resistor R1 and a capacitor C1 are connected in parallel.

The fixed electrode 142 is connected to the negative input terminal of a differential amplifier Q2 in the detecting circuit 210. The positive input terminal of the differential amplifier Q2 is grounded. Between the negative input terminal and the output terminal of the differential amplifier Q2, a resistor R2 and a capacitor C2 are connected in parallel.

The output terminal of the differential amplifier Q1 is connected to one of the input terminals (the negative input terminal, for example) of a differential amplifier Q3 through a resistor R3 and the output terminal of the differential amplifier Q2 is connected to the other one of the input terminals (the positive input terminal, for example) of the differential amplifier Q3 through a resistor R4. Between the one of the input terminals and the output terminal of the differential amplifier Q3, a resistor R5 is connected in parallel to the differential amplifier Q3. Moreover, the connection between the resistor R4 and the other one of the input terminals of the differential amplifier Q3 is grounded through a resistor R6. The output of the differential amplifier Q3 is inputted to the correcting unit 300.

Each of the differential amplifiers Q1 and Q2 forms an electric charge to voltage conversion circuit which converts the capacitance between the fixed electrode connected thereto and the moving electrode to a voltage signal, the value of which corresponds to the amount of electric charges stored between the electrodes depending on the capacitance, and outputs the voltage signal. The differential amplifier Q3 is an amplifier carrying out a difference operation which amplifier outputs the result of the difference operation carried out with respect to the voltage signal outputted from the differential amplifier Q1 and the voltage signal outputted from the differential amplifier Q2.

In theoretical formulas that will be explained later, each of calculated outputs is expressed as capacitance in F. In the actual electrostatic capacitance sensor 10, however, voltage signals in V are outputted into which capacitances are converted by the differential amplifiers Q1 and Q2.

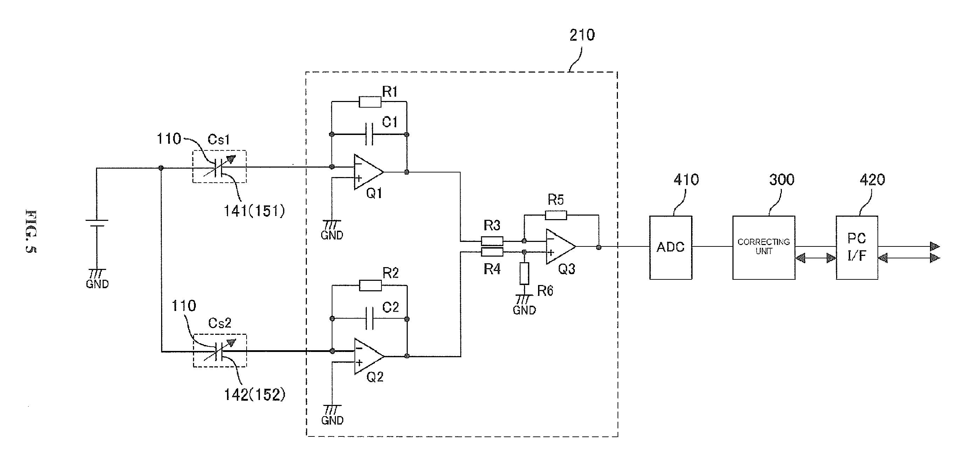

FIGURE 5 is a diagram showing an example of the circuit configuration of the detecting circuit 210 detecting the value of the acceleration in the X direction or in the Y direction provided in the detecting unit 200 in another example of the configuration of the electrostatic capacitance sensor 10. The circuit configuration shown in FIG. 5, except that an A/D converting unit 410 and an interface 420 are provided, is the same as the circuit configuration shown in FIG. 4.

The A/D converting unit 410 is provided between the detecting circuit 210 and the correcting unit 300 to convert the output signal (analog signal) from the detecting circuit 210 to a digital signal. The correcting unit 300 carries out correction processing by carrying out digital processing of the digital signal outputted from the A/D converting unit 410.

The interface 420 is an interface that connects an external device of the electrostatic capacitance sensor 10 (a computer, for example) and the correcting unit 300. The interface is one of, for example, USB, RS-232C and Ethernet (registered trademark) etc. The correcting unit 300 is provided with the correction data storing unit 302 as is shown in FIG. 2 and the information stored in the correction data storing unit 302 is rewritable through the interface 420.

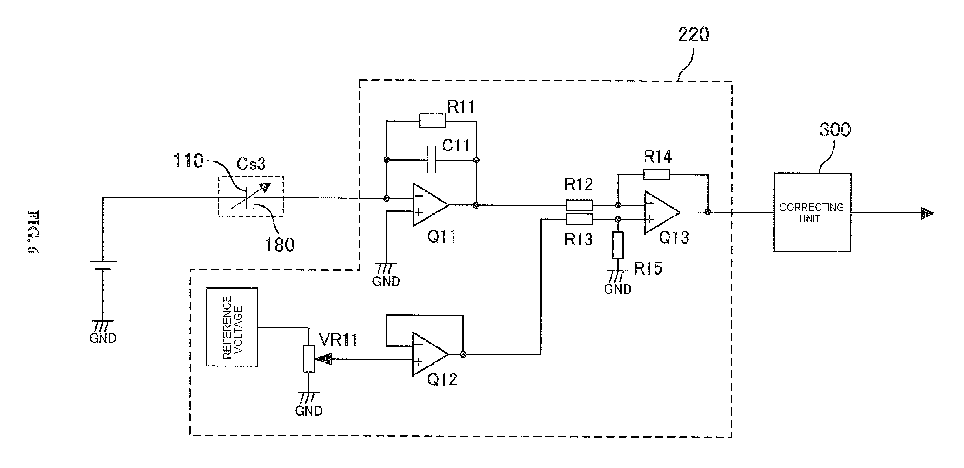

FIGURE 6 is a diagram showing an example of the circuit configuration of a detecting circuit 220 detecting the value of the acceleration in the Z direction provided in the detecting unit 200 in further another example of the configuration of the electrostatic capacitance sensor 10. The detecting circuit 220 is connected to the fixed electrodes 180 for detecting the value of acceleration in the Z direction.

As is explained in the foregoing, to the movable electrode 110, a DC voltage is applied. The fixed electrode 180 is connected to the negative input terminal of a differential amplifier Q11 in the detecting circuit 220. The positive input terminal of the differential amplifier Q11 is grounded. Between the negative input terminal and the output terminal of the differential amplifier Q11, a resistor R11 and a capacitor C11 are connected in parallel.

The output terminal of the differential amplifier Q11 is connected to one of the input terminals (the negative input terminal, for example) of a differential amplifier Q13 through a resistor R12. To the other one of the input terminals (the positive input terminal, for example) of the differential amplifier Q13, the output terminal of the differential amplifier Q12 is connected through a resistor R13. The negative input terminal of the differential amplifier Q12 is connected to the output terminal of the differential amplifier Q12. To the positive input terminal of the differential amplifier Q12, a reference voltage is applied through a variable resistor VR11.

In addition, between the one of the input terminals and the output terminal of the differential amplifier Q13, a resistor R14 is connected in parallel to the differential amplifier Q13. Moreover, the connection between the resistor R13 and the other one of the input terminals of the differential amplifier Q13 is grounded through a resistor R15. The output of the differential amplifier Q13 is inputted to the correcting unit 300.

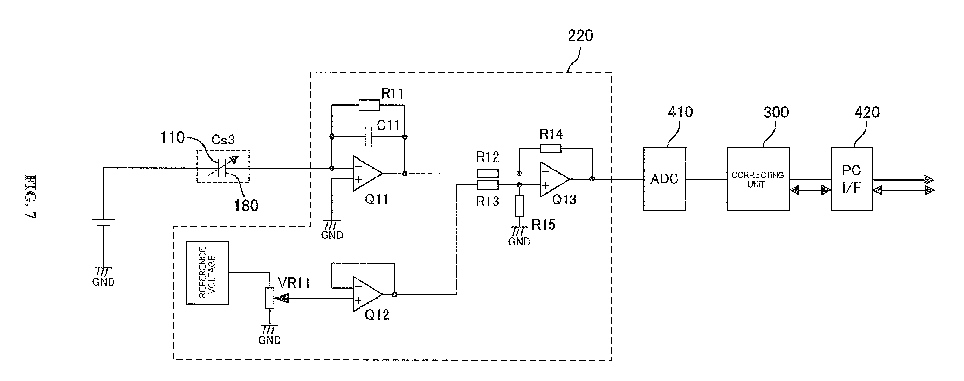

FIGURE 7 is a diagram showing an example of the circuit configuration of a detecting circuit 220 detecting the value of the acceleration in the Z direction provided in the detecting unit 200 in still further another example of the configuration of the electrostatic capacitance sensor 10. The difference between the circuit configuration shown in FIG. 7 and the circuit configuration shown in FIG. 6 is the same as the difference between the circuit configuration shown in FIG. 5 and the circuit configuration shown in FIG. 4.

<Sensitivity Inspection System 2000>

As was explained in the foregoing, the sensitivity inspection system 2000 is a system inspecting the sensitivity of the electrostatic capacitance sensor 10. Therefore, the sensitivity inspection system 2000 has an output acquisition unit 2020, a first conversion unit 2040 and a second conversion unit 2060 which are shown in FIG. 1. In the following, each of them will be explained. In the inspection of the electrostatic capacitance sensor 10, suppose that the value of the acceleration in the first direction (first reference acceleration) and the value of the acceleration in the second direction (second reference acceleration) have been determined which are to be the reference values of the inspection. For example, each of the values of the first reference acceleration and the second reference acceleration is a value equal to the magnitude of the gravitational acceleration. When the electrostatic capacitance sensor 10 has the structure explained in the foregoing, the first direction is any one of the X direction, the Y direction and the Z direction. The second direction is any one of the X direction, the Y direction and the Z direction which is different from the first direction.

«Output Acquisition Unit 2020»

The output acquisition unit 2020 acquires a first output based on first capacitance and a second output based on second capacitance from the electrostatic capacitance sensor 10 made inclined to be in an inspection state. That is, the first output is the output of the electrostatic capacitance sensor 10 with respect to the first direction and the second output is the output of the electrostatic capacitance sensor 10 with respect to the second direction. Here, the value of the acceleration applied in the first direction in the inspection state is different from the value of the first reference acceleration. Similarly, the value of the acceleration applied in the second direction in the inspection state is also different from the value of the second reference acceleration.

For example, suppose that the electrostatic capacitance sensor 10 has the structure explained in the foregoing. In this case, when the first direction is the X direction, the first output is an output outputted from the detecting unit 200 on the basis of the capacitance between the fixed electrode 141 and the movable electrode 110 and the capacitance between the movable electrode 110 and the fixed electrode 142. Similarly, when the second direction is the Z direction, for example, the second output is an output outputted from the detecting unit 200 on the basis of the capacitance between the fixed electrode 180 and the movable electrode 110.

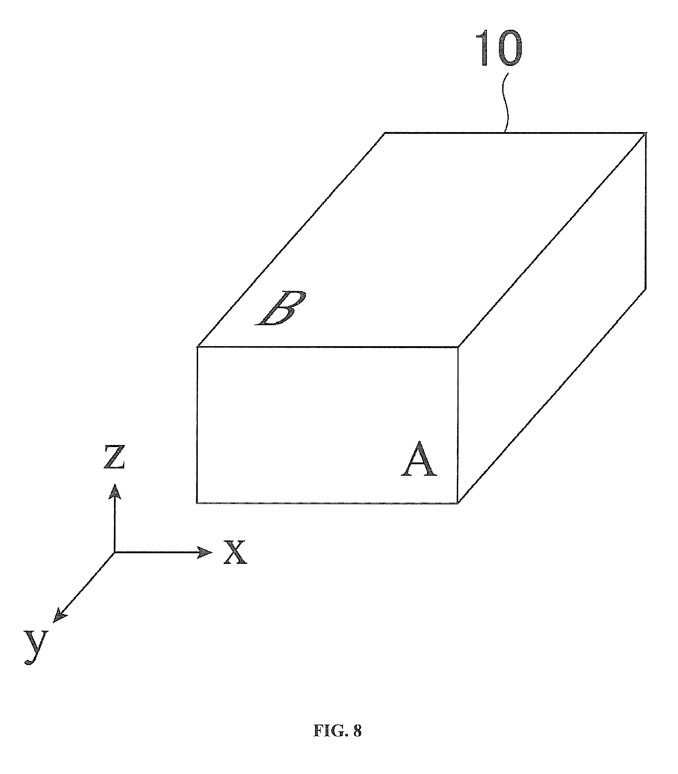

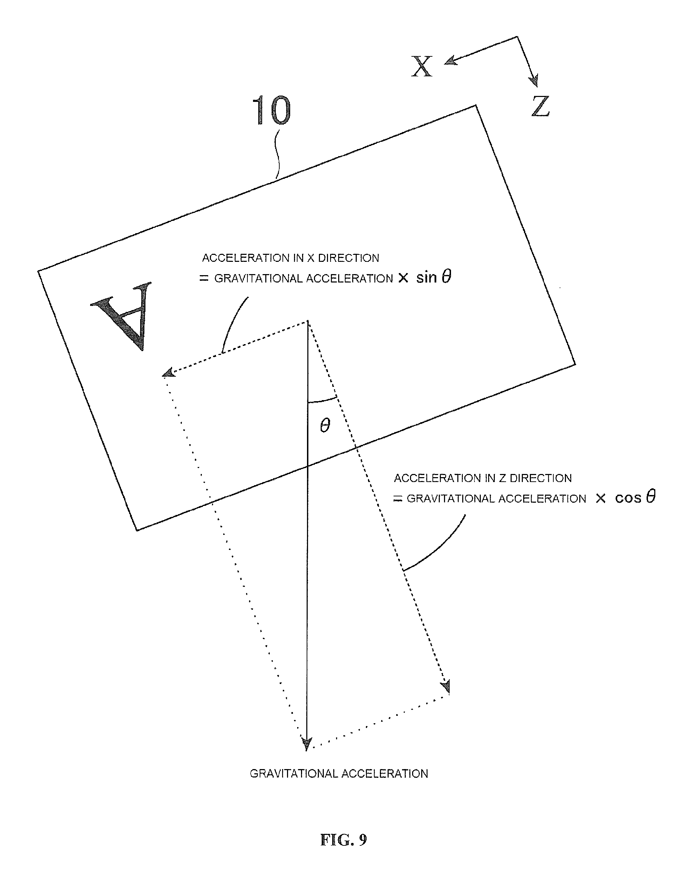

Here, the inspection state explained in the foregoing is a state in which the electrostatic capacitance sensor 10 is inclined in any one direction or in a plurality of directions from the standard state. FIGURE 8 is a perspective view showing the case of the electrostatic capacitance sensor 10 in the standard state. Suppose that the electrostatic capacitance sensor 10 shown in FIG. 2 and FIG. 3 is contained in the case. In addition, FIG. 9 is a side view in which the case of the electrostatic capacitance sensor 10 shown in FIG. 8 brought into the inspection state is viewed from the Y direction in FIG. 8. This is equivalent to a state in which the electrostatic capacitance sensor 10 shown in FIG. 3 is made inclined while being turned upside down.

As is shown in FIG. 9, when the electrostatic capacitance sensor 10 is inclined by an angle θ to the direction of the gravitational acceleration, the acceleration to which the gravitational acceleration is multiplied by a value of the sine of the angle θ (sinθ) is applied in the X direction of the electrostatic capacitance sensor 10 and the acceleration to which the gravitational acceleration is multiplied by a value of the cosine of the angle θ (cosθ) is applied in the Z direction of the electrostatic capacitance sensor 10. Therefore, in FIG. 9, the movable electrode 110 of the electrostatic capacitance sensor 10 shifts both in the X direction and in the Z direction. As a result, the electrostatic capacitance sensor 10 detects accelerations applied both in the X direction and in the Z direction.

Here, the output acquisition unit 2020 may acquire the first output and the second output directly from the electrostatic capacitance sensor 10 or may acquire the first output and the second output indirectly from other devices. When the first output and the second output are directly acquired from the electrostatic capacitance sensor 10, the sensitivity inspection system 2000 is connected to the electrostatic capacitance sensor 10 so that the communication therewith is possible. When the first output and the second output are indirectly acquired from a device other than the electrostatic capacitance sensor 10, the sensitivity inspection system 2000, for example, is connected to a device such as a storage device, in which the values of the first output and the values of the second output are stored, so that the communication therewith is possible. The sensitivity inspection system 2000 acquires the values of the first output and the values of the second output from the storage device etc. Moreover, the first output and second output may be manually inputted to the sensitivity inspection system 2000. In this case, the sensitivity inspection system 2000 has an input unit accepting the input of the first output and the second output.

«First Conversion Unit 2040»

The first conversion unit 2040 converts the value of the first output outputted from the output acquisition unit 2020 to the value of a first converted output. The value of the first converted output is a value to which the value of the first output is converted to the value of the output of the electrostatic capacitance sensor 10 based on the first capacitance when the first reference acceleration is applied. First, the first conversion unit 2040 acquires the ratio of the theoretical value of the output of the electrostatic capacitance sensor 10 when the first reference acceleration is applied thereto to the theoretical value of the output of the electrostatic capacitance sensor 10 based on the first capacitance in the inspection state as a first ratio. The first conversion unit 2040 then carries out a multiplication of the value of the first output by the value of the acquired first ratio. The calculations of the theoretical values will be explained later.

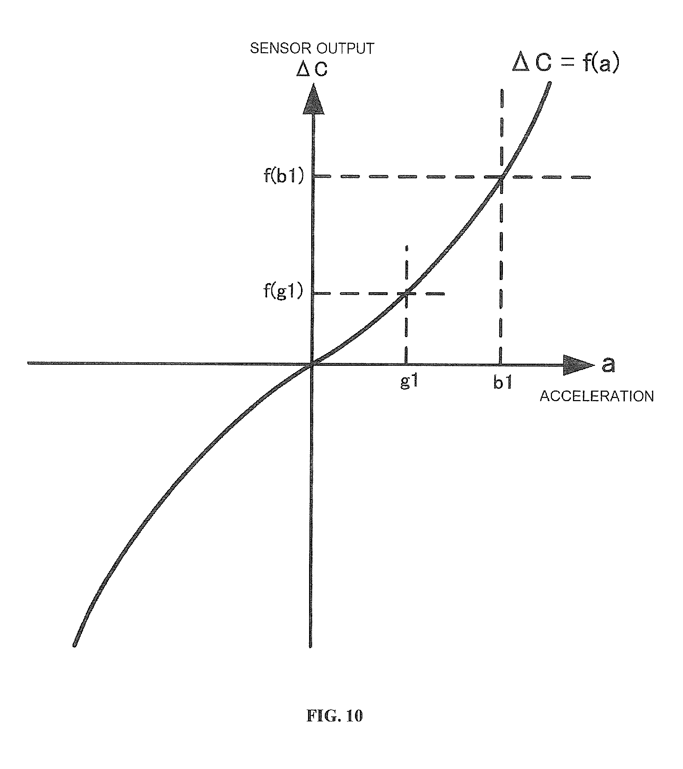

The processing carried out in the first conversion unit 2040 will be conceptually explained by using FIG. 10. FIGURE 10 is a graph showing a relationship between the acceleration applied in the first direction of the electrostatic capacitance sensor 10 and the output ΔC of the electrostatic capacitance sensor 10 corresponding to the acceleration which relationship is obtained on the basis of a first theoretical formula that will be explained later. The horizontal axis represents the acceleration and the vertical axis represents the output ΔC of the electrostatic capacitance sensor 10, where the relationship between ΔC and a is expressed as ΔC = f(a).

Letting the first reference acceleration be +b1, the theoretical value of the output of the electrostatic capacitance sensor 10 based on the first capacitance at the first reference acceleration is expressed as f(+b1). In the first direction of the electrostatic capacitance sensor 10 in the inspection state, the component in the first direction of the gravitational acceleration is applied. Here, letting the component of the gravitational acceleration applied to the electrostatic capacitance sensor 10 from the first direction be g1, the theoretical value of the output of the electrostatic capacitance sensor 10 based on the first capacitance is expressed as f(g1).

The first conversion unit 2040 acquires the value of the first ratio f(b1)/f(g1) as the ratio of the two theoretical values. The first conversion unit 2040 then carries out a multiplication of the value of a first output (letting it be o1), which the output acquisition unit 2020 acquired, by the value of the first ratio f(b1)/f(g1) to calculate out the resulting value o1*{f(b1)/f(g1)}. The value o1*{f(b1)/f(g1)} becomes the value of the first converted output.

«Second Conversion Unit 2060»

The second conversion unit 2060 converts the value of the second output outputted from the output acquisition unit 2020 to the value of a second converted output. The value of the second converted output is a value to which the value of the second output is converted to the value of the output of the electrostatic capacitance sensor 10 based on the second capacitance when the second reference acceleration is applied. First, the second conversion unit 2060 acquires the ratio of the theoretical value of the output of the electrostatic capacitance sensor 10 when the second reference acceleration is applied thereto to the theoretical value of the output of the electrostatic capacitance sensor 10 based on the second capacitance in the inspection state as a second ratio. The second conversion unit 2060 then carries out a multiplication of the value of the second output by the value of the acquired second ratio. The value obtained by the multiplication is the value of the second converted output.

The conversion processing carried out by the second conversion unit 2060 is the same as the conversion processing carried out by the first conversion unit 2040. Therefore, the detail explanation thereof will be omitted.

The value of the first ratio, the ratio of the theoretical value of the output of the electrostatic capacitance sensor 10 based on the first capacitance at the first reference acceleration to the theoretical value of the output of the electrostatic capacitance sensor 10 based on the first capacitance in the inspection state, may have been calculated beforehand or may be calculated when the first conversion unit 2040 is operated. Similarly, the value of the ratio of the theoretical value of the output of the electrostatic capacitance sensor 10 based on the first capacitance at the second reference acceleration to the theoretical value of the output of the electrostatic capacitance sensor 10 based on the second capacitance in the inspection state may have been calculated beforehand or may be calculated when the second conversion unit 2060 is operated. When each of the values of the ratios have been calculated beforehand, each of the calculated values of the calculated ratios is to be stored in a storage unit provided externally or internally to the sensitivity inspection system 2000.

<Calculation of the Theoretical Values of the Outputs of the Electrostatic capacitance sensor 10>

As was explained in the foregoing, the first conversion unit 2040 and the second conversion unit 2060 use theoretical values of the outputs of the electrostatic capacitance sensor 10. In the following, calculation of the theoretical values of the outputs of the electrostatic capacitance sensor 10 will be explained.

For calculating the theoretical values of the outputs of the electrostatic capacitance sensor 10, theoretical formulas are used each of which expresses the relationship between the acceleration applied to the electrostatic capacitance sensor 10 and the output of the electrostatic capacitance sensor 10 to the applied acceleration. Here, the theoretical formula in the case when the acceleration is applied from the X or the Y direction in FIG. 2 and the theoretical formula in the case when the acceleration is applied from the Z direction in FIG. 3 become theoretical formulas different from each other. In the following, the theoretical formula in each of the cases will be explained with the procedure for deriving it included.

«Theoretical Formula with respect to X or Y direction»

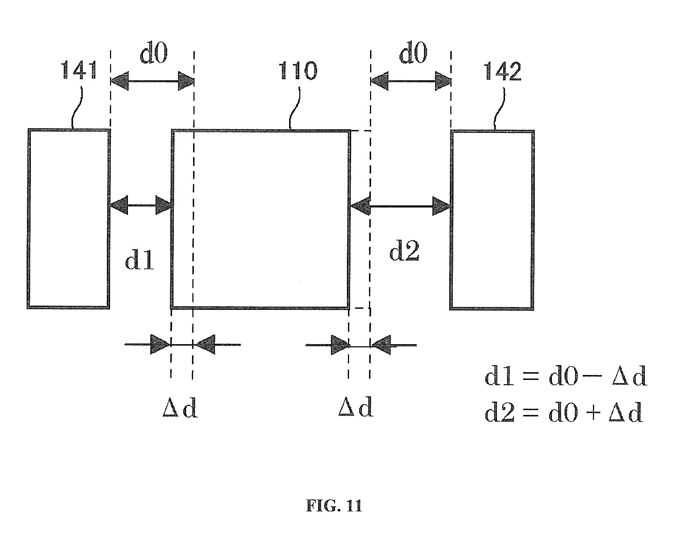

First, the theoretical formula with respect to the X direction or the Y direction will be explained. The theoretical formula with respect to the X direction and the theoretical formula with respect to the Y direction can be derived by similar procedures. Therefore, in the following, the theoretical formula with respect to the X direction will be explained. FIGURE 11 is a view showing the movement of the movable electrode 110 when the acceleration in the X direction shown in FIG. 2 and FIG. 3 is applied to the movable electrode 110 of the electrostatic capacitance sensor 10. Consider that the initial spacing (the spacing between electrodes when acceleration is zero) between the movable electrode 110 and each of the fixed electrodes 141 and 142 is $d_0$. When the movable electrode 110 shifts leftward by $\Delta d$, the spacing $d_1$ between the movable electrode 110 and the fixed electrode 141 becomes (do - $\Delta$d) and the spacing $d_2$ between the movable electrode 110 and the fixed electrode 142 becomes (do + $\Delta$d).

Then, the capacitance $C_1$ between the movable electrode 110 and the fixed electrode 141 is obtained by the formula (1) :

$$C_1 = \varepsilon \cdot S_1 \cdot \frac{1}{(d_0 - \Delta d)} \ [F] \cdots (1)$$

where $\varepsilon$ is the dielectric constant and $S_1$ is the area of the section where the movable electrode 110 and the fixed electrode 141 are opposite to each other.

Similarly, the capacitance $C_2$ between the movable electrode 110 and the fixed electrode 142 is obtained by the formula (2):

$$C_2 = \varepsilon \cdot S_2 \cdot \frac{1}{(d_0 + \Delta d)} \; [F] \cdots (2)$$

where $S_2$ is the area of the section where the movable electrode 110 and the fixed electrode 142 are opposite to each other.

Here, $S_2$ is equal to $S_1$. Then, the theoretical formula expressing the output $\Delta C$ from the detecting circuit 210 shown in FIG. 4, being given as the difference between $C_1$ given by the formula (1) and $C_2$ given by the formula (2), becomes like the following formula (3). Here, the conversion factor from the value of the capacitance to the value of the output $\Delta C$ from the detecting circuit 210 is taken as unity for convenience:

$$\Delta C = \varepsilon \cdot S_1 \cdot \frac{2\Delta d}{(d_0{}^2 - \Delta d^2)} \; [F] \cdots (3)$$

Letting the mass of the movable electrode 110 be m, the spring constant in the X direction of an assumed spring representing the four beams 130 be k, the acceleration applied in the X direction as the first direction of the electrostatic capacitance sensor 10 be a as was explained in the foregoing and the force applied to the spring by the application of the acceleration a be f, the formula (3) is transformed as follows by using the relationship of $f = m \cdot a = k \cdot \Delta d$:

$$\Delta C = \varepsilon \cdot S_1 \cdot \frac{2((m/k) \cdot a)}{(d_0{}^2 - ((m/k) \cdot a)^2)} \; [F] \cdots (4)$$

The formula (4) becomes a first theoretical formula expressing the relationship between the acceleration a applied in the X direction and the output $\Delta C$ of the electrostatic capacitance sensor 10 with respect to the first direction when the acceleration a is applied. Here, letting the X direction be the first direction, the first theoretical formula can be regarded as the theoretical formula expressing the relationship between the acceleration a applied in the first direction and the output of the electrostatic capacitance sensor 10 based on the first capacitance (the difference between the capacitance between the movable electrode 110 and the fixed electrode 141 and the capacitance between the movable electrode 110 and the fixed electrode 142) when the acceleration a is applied.

Therefore, the theoretical value of the output of the electrostatic capacitance sensor 10 in the case when the acceleration with a certain magnitude $a_1$ is applied thereto from the first direction is obtained by substituting $a_1$ for a in the first theoretical formula (4).

«Theoretical Formula with respect to Z direction»

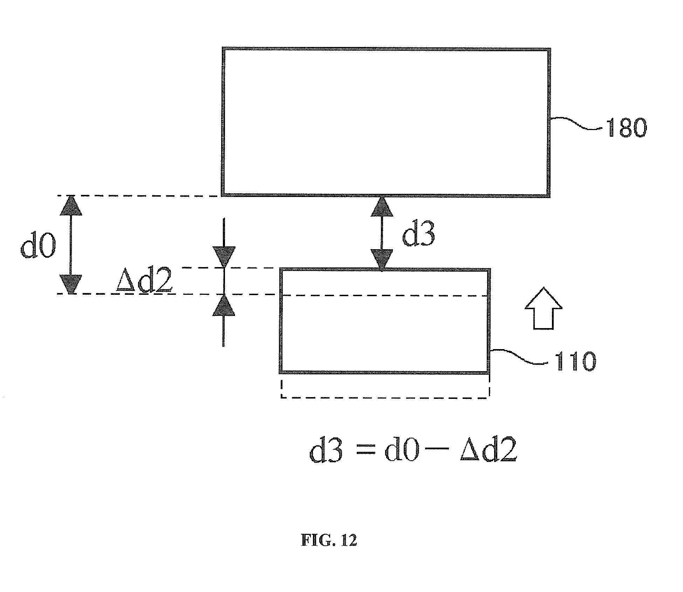

Next, the theoretical formula with respect to the Z direction in FIG. 3 will be explained. FIGURE 12 is a view showing the movement of the movable electrode 110 when the acceleration in the Z direction shown in FIG. 3 is applied to the movable electrode 110 of the electrostatic capacitance sensor 10. Consider that the initial spacing (the spacing between electrodes when acceleration is zero) between the movable electrode 110 and the fixed electrode 180 is $d_0$. When the movable electrode 110 shifts upward by $\Delta d_2$, the spacing $d_3$ between the movable electrode 110 and the fixed electrode 180 becomes $d_0 - \Delta d_2$.

Then, the capacitance $C_3$ between the movable electrode 110 and the fixed electrode 180 is obtained by the formula (5) :

$$C_3 = \varepsilon \cdot S_3 \cdot \frac{1}{(d_0 - \Delta d_2)} \; [F] \cdots (5)$$

where $\varepsilon$ is the dielectric constant and $S_3$ is the area of the section where the movable electrode 110 and the fixed electrode 180 are opposite to each other.

Then, the theoretical formula expressing the output ΔC from the detecting circuit 220 shown in FIG. 6 becomes like the following formula (6) with the conversion factor from the value of the capacitance to the value of the output ΔC taken as unity as was explained in the foregoing:

$$\Delta C = \varepsilon \cdot S_3 \cdot \frac{\Delta d_2}{d_0 \cdot (d_0 - \Delta d_2)} \quad [F] \quad \cdots (6)$$

Letting the mass of the movable electrode 110 be m, the spring constant in the Z direction of an assumed spring representing the four beams 130 be $k_2$, the acceleration applied in the Z direction as the second direction of the electrostatic capacitance sensor 10 be a as was explained in the foregoing and the force applied to the spring by the application of the acceleration a be f, the formula (6) is transformed as follows by using the relationship of $f = m \cdot a = k_2 \cdot \Delta d_2$:

$$\Delta C = \varepsilon \cdot S_3 \cdot \frac{(m/k_2) \cdot a}{d_0 \cdot (d_0 - (m/k_2) \cdot a)} \quad [F] \quad \cdots (7)$$

The formula (7) becomes a second theoretical formula expressing the relationship between the acceleration a applied in the Z direction and the output ΔC of the electrostatic capacitance sensor 10 with respect to the second direction when the acceleration a is applied. Here, letting the Z direction be the second direction, the second theoretical formula can be regarded as the theoretical formula expressing the relationship between the acceleration a applied in the second direction and the output of the electrostatic capacitance sensor 10 based on the second capacitance (the capacitance between the movable electrode 110 and the fixed electrode 180) when the acceleration a is applied. Therefore, the theoretical value of the output of the electrostatic capacitance sensor 10 in the case when the acceleration with a certain magnitude $a_2$ is applied thereto from the second direction is obtained by substituting $a_2$ for a in the second theoretical formula (7).

<Hardware Configuration of Sensitivity Inspection System 2000>

Each of functional units provided in the sensitivity inspection system 2000 is actualized as at least one hardware component in a state of one individual unit or with a plurality of the units being combined, for example. In addition, each of the functional units is actualized as at least one software component, for example. Furthermore, each of the functional units is actualized by the combination of at least one hardware component and at least one software component, for example.

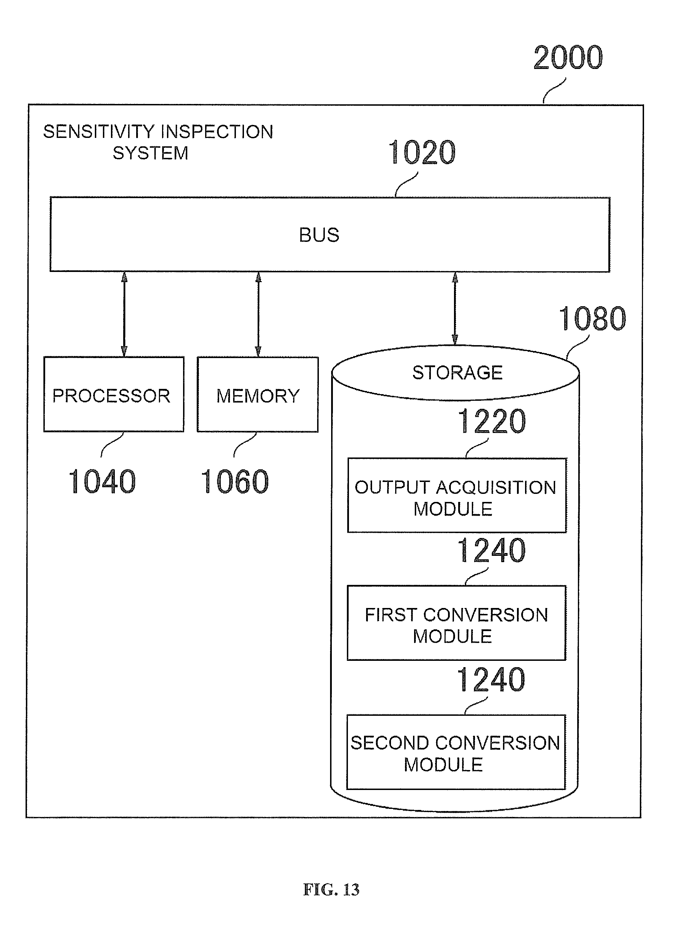

FIGURE 13 is a block diagram showing an example of the hardware configuration of the sensitivity inspection system 2000. In FIG. 13, the sensitivity inspection system 2000 has a bus 1020, a processor 1040, a memory 1060 and a storage 1080.

The bus 1020 is a data transmission channel through which the processor 1040, the memory 1060 and the storage 1080 carry out sending and receiving data one another. The processor 1040 is a processor such as a CPU (Central Processing Unit) or a GPU (Graphics Processing Unit), for example. The memory 1060 is a memory such as a RAM (Random Access Memory) or a ROM (Read Only Memory), for example. The storage 1080 is a storage device such as a hard disk, an SSD (Solid State Drive) or a memory card, for example. The storage 1080 can be a memory such as a RAM or a ROM.

An output acquisition module 1220 is a program for making the sensitivity inspection system 2000 have the function of the output acquisition unit 2020. The processor 1040 executes the output acquisition module 1220 to thereby actualize the function of the output acquisition unit 2020.

A first conversion module 1240 is a program for making the sensitivity inspection system 2000 have the function of the first conversion unit 2040. The processor 1040 executes the first conversion module 1240 to thereby actualize the function of the first conversion unit 2040.

A second conversion module 1260 is a program for making the sensitivity inspection system 2000 have the function of the second conversion unit 2060. The processor 1040 executes the second conversion module 1260 to thereby actualize the function of the second conversion unit 2060.

For example, the processor 1040 reads out the modules on the memory 1060 to execute them. The processor 1040, however, may execute the modules without reading them out on the memory 1060.

The storage 1080 stores the modules 1220, 1240 and 1260.

The hardware configuration of the sensitivity inspection system 2000 is not limited to the configuration shown in FIG. 13. For example, each of the modules may be stored in the memory 1060. In this case, the sensitivity inspection system 2000 may be provided with no storage 1080.

<Flow of Processing>

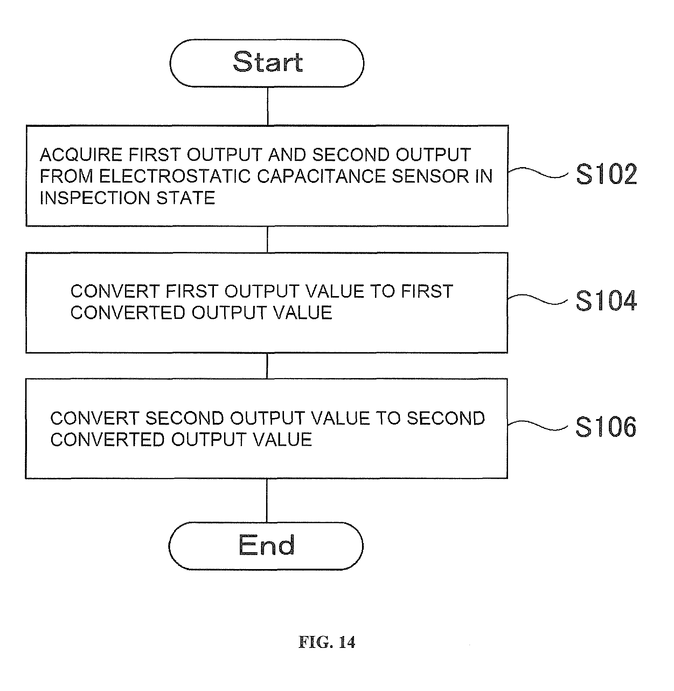

FIGURE 14 is a flowchart showing an example of the flow of the processing executed by the sensitivity inspection system 2000 of the embodiment 1. At step S102, the output acquisition unit 2020 acquires the first output based on the first capacitance and the second output based on the second capacitance from the electrostatic capacitance sensor 10 in the inspection state. At step S104, the first conversion unit 2040 converts the value of the first output to the value of the first converted output. At step S106, the second conversion unit 2060 converts the second output to the second converted output.

The flow of the processing executed by the sensitivity inspection system 2000 in the embodiment 1 is not limited to the flow shown in FIG. 14. For example, the processing at step S104 and the processing at step S106 can be executed in parallel.

<Working and Effect>

In general, with respect to the sensitivity of the electrostatic capacitance sensor 10, an inspection is carried out which "checks as to whether the value of the output of the electrostatic capacitance sensor 10 when the acceleration to be a reference is applied thereto is within the intended range (hereinafter referred to as the correct range) or not". Here, the "correct range" used in the inspection is expressed as the range of the value of the output of the electrostatic capacitance sensor 10 when the acceleration to be the reference is applied thereto. For the reference acceleration, the gravitational acceleration is generally used.

Specifically, for the inspection of the electrostatic capacitance sensor 10, the correct ranges of the values of the outputs of the electrostatic capacitance sensor 10 are used which are specified with respect to conditions in 1) the case of applying the acceleration of +1G in the X direction, 2) the case of applying the acceleration of -1G in the X direction, 3) the case of applying the acceleration of +1G in the Y direction, 4) the case of applying the acceleration of -1G in the Y direction and 5) the case of applying the acceleration of -2G in the Z direction, respectively. Here, the acceleration of 1G represents the magnitude of the gravitational acceleration. With the electrostatic capacitance sensor 10 brought into under the condition in each of the five cases, an inspection is carried out as to whether the output of the electrostatic capacitance sensor 10 under the condition is within the correct range or not. Therefore, in the inspection using an inspection system applying acceleration only in any one direction, it becomes necessary to carry out five-time measurements.

With the mounted state of the electrostatic capacitance sensor 10 of the sensitivity inspection system 2000 shown in FIG. 8 regarded as the standard state, the value of the acceleration applied in each of the X, Y and Z directions in this state is regarded as 0G. Moreover, the sensitivity inspection system 2000 is regarded as being adjusted so that the output with respect to each of the X, Y and Z directions in the standard state becomes zero.

In the sensitivity inspection system 2000 of the embodiment adjusted like the foregoing, from the electrostatic capacitance sensor 10 being made inclined to be brought into the inspection state shown in FIG. 9, two outputs the output based on the first capacitance of the electrostatic capacitance sensor 10 and the output based on the second capacitance of the electrostatic capacitance sensor 10, can be obtained at the same time. Therefore, the number of measurements with respect to the electrostatic capacitance sensor 10 can be reduced.

Furthermore, the sensitivity inspection system 2000 converts the value of the output of the electrostatic capacitance sensor 10, which the output acquisition unit 2020 obtained with respect to the first direction, to the value of the output when the first reference acceleration is applied and converts the value of the output of the electrostatic capacitance sensor 10, which the output acquisition unit 2020 obtained with respect to the second direction, to the value of the output when the first reference acceleration is applied. Therefore, whatever value of reference acceleration is adopted in the specification of the sensitivity of the electrostatic capacitance sensor 10, by converting the measured value of the output of the electrostatic capacitance sensor 10 to the value when the reference acceleration is applied, the inspection of the electrostatic capacitance sensor 10 can be carried out as to whether the electrostatic capacitance sensor 10 meets the specification of the sensitivity or not

In addition, the sensitivity inspection system 2000 of the embodiment carries out conversion using the theoretical value of the output of the electrostatic capacitance sensor 10 in each of the first conversion unit 2040 and the second conversion unit 2060. Here, as was expressed in the first theoretical formula (4) or the second theoretical formula (7) in the foregoing, the relationship between the acceleration applied to the electrostatic capacitance sensor 10 and the output of the electrostatic capacitance sensor 10 becomes nonlinear. Thus, in the conversion in which the relationship between acceleration and a sensor output is regarded as being in a simple proportional relationship, for example, an inspection accuracy is lowered. For example, the conversion, which is carried out on the basis of the result of the measurement that "the sensor output when the acceleration of 0.5G is applied is 1W" as "the sensor output when the acceleration of 1G is applied is taken as 2W", will provide low accuracy. Compared with this, according to the invention, correct conversion is carried out by using theoretical values based on the theoretical formulas. Therefore, the accuracy in the sensitivity inspection of the electrostatic capacitance sensor 10 can be enhanced.

[Embodiment 2]

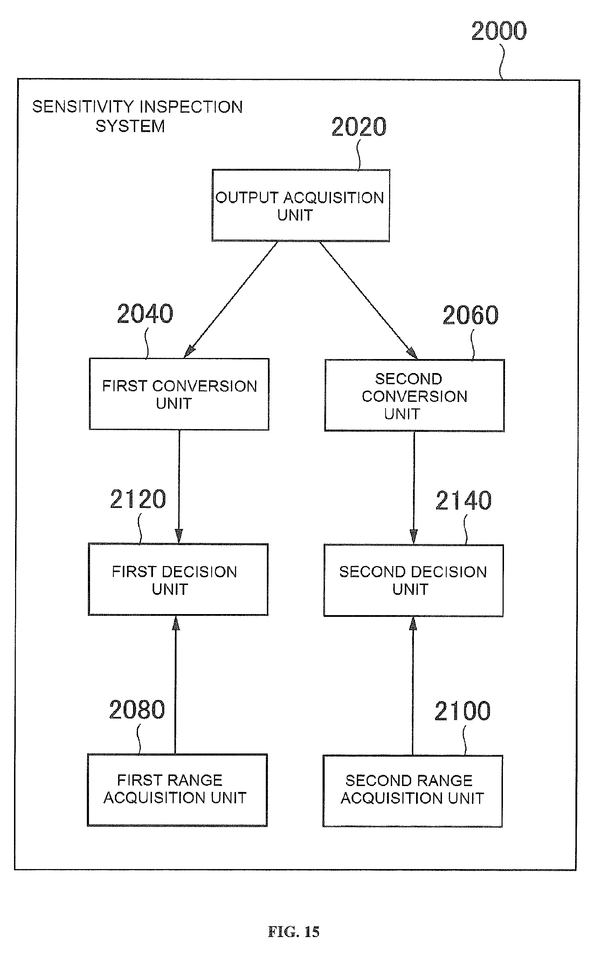

FIGURE 15 is a block diagram showing an example of a sensitivity inspection system 2000 according to embodiment 2 of the invention. In FIG. 15, arrows show flows of information. Moreover, in FIG. 15, each block represents a functional unit rather than a hardware unit.

The sensitivity inspection system 2000 of embodiment 2 acquires a correct range with respect to the value of each of the first output and the second output and carries out decision as to whether the value of each of the first output and the second output is within the acquired correct range or not. For carrying out the decision, the sensitivity inspection system 2000 of embodiment 2 has a first range acquisition unit 2080, a second range acquisition unit 2100, a first decision unit 2120 and a second decision unit 2140. The units will be explained in detail in the following.

<First range acquisition unit 2080>

The first range acquisition unit 2080 acquires a first range representing the correct range of the value of the output of the electrostatic capacitance sensor 10 with respect to the acceleration in the first direction. The first range is, for example, the correct range specified as that of the electrostatic capacitance sensor 10.

<Second range acquisition unit 2100>

The second range acquisition unit 2100 acquires a second range representing the correct range of the value of the output of the electrostatic capacitance sensor 10 with respect to the acceleration in the second direction. The second range is, for example, the correct range specified as that of the electrostatic capacitance sensor 10.

<First decision unit 2120>

The first decision unit 2120 makes a decision as to whether the value of the first converted output is within the first range or not.

<Second decision unit 2140>

The second decision unit 2140 makes a decision as to whether the value of the second converted output is within the second range or not.

<Flow of Processing>

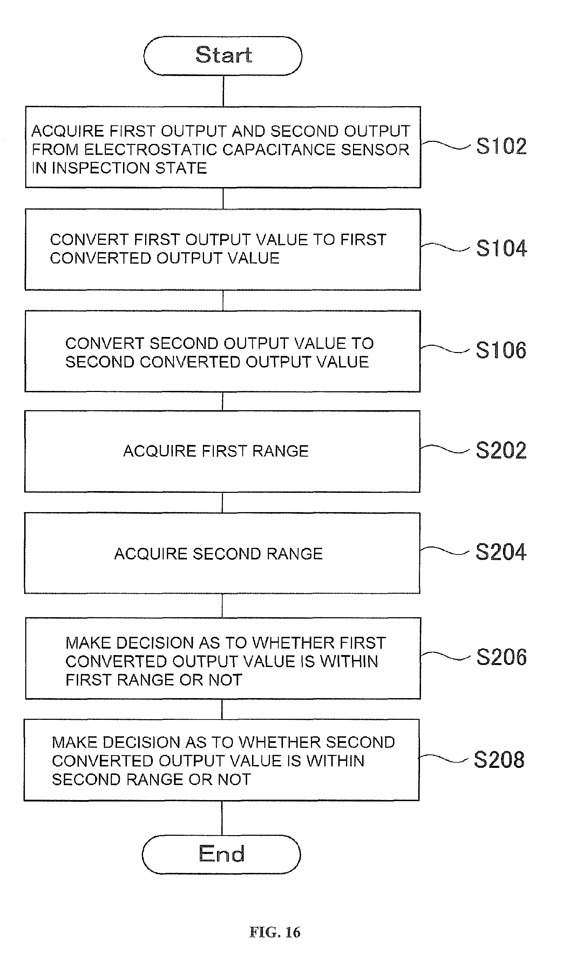

FIGURE 16 is a flowchart showing an example of the flow of the processing executed by the sensitivity inspection system 2000 of the embodiment 2 of the invention. The processing from step S102 to step S106 is similar to that from step S102 to step S106 in FIG. 14.

At step S202, the first range acquisition unit 2080 acquires the first range. At step S204, the second range acquisition unit 2100 acquires the second range. At step 206, the first decision unit 2120 makes a decision as to whether the value of the first converted output is within the first range or not. At step S208, the second decision unit 2140 makes a decision as to whether the value of the second converted output is within the second range or not.

The flow of the processing executed by the sensitivity inspection system 2000 in the embodiment 2 is not limited to the flow shown in FIG. 16. For example, the processing at "steps S104, S202 and S206" as the processing with respect to the first output and the processing at steps "S106, S204 and S208" as the processing with respect to the second output can be executed in parallel. In addition, the processing can be also executed so that the steps of the processing with respect to the first direction are executed in order before executing the steps of the processing with respect to the second direction in order.

<Working and Effect>

According to the embodiment 2, the decision as to whether the value of the first converted output is within the correct range (first range) or not and the decision as to whether the value of the second converted output is within the correct range (second range) or not are automatically made by the sensitivity inspection system 2000. Therefore, compared with the case in which the decisions are made manually, the inspection of the sensitivity of the electrostatic capacitance sensor 10 is facilitated.

[Example]

In the following, a specific example of the sensitivity inspection system 2000 will be shown. The shape of the case of the electrostatic capacitance sensor 10 in the example is regarded as a rectangular prism as is shown in FIG. 8. Moreover, the internal configuration of the electrostatic capacitance sensor 10 is regarded as being the same as the configuration in the example shown in FIGS. 2 and 3.

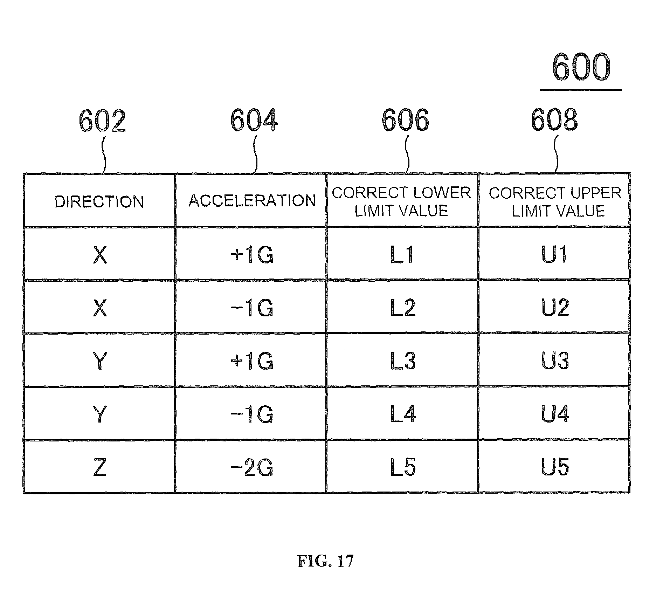

FIGURE 17 is a table showing examples of specifications which the values of the sensor outputs of the electrostatic capacitance sensor 10 are required to meet (hereinafter referred to as sensitivity specifications for the electrostatic capacitance sensor 10). The table shown in FIG. 17 is denoted as the specification table 600. The specification table 600 shows specifications with respect to each of the items of the direction 602, the acceleration 604, the correct lower limit value 606 and the correct upper limit value 608. The direction 602 represents the direction of the applied acceleration. The acceleration 604 represents the magnitude of the applied acceleration. The correct lower limit value 606 represents the lower limit value of the correct range in "the case of applying acceleration with the magnitude shown in the item of the acceleration 604 from the direction shown in the item of the direction 602." Similarly, the correct upper limit value 608 represents the upper limit value of the correct range in "the case of applying acceleration with the magnitude shown in the item of the acceleration 604 from the direction shown in the item of the direction 602."

From the first row to the fifth row in the specification table 600, the correct ranges of the values of the outputs of the electrostatic capacitance sensor 10 are shown under five conditions of 1) applying the acceleration of +1G in the X direction, 2) applying the acceleration of -1G in the X direction, 3) applying the acceleration of +1G in the Y direction, 4) applying the acceleration of -1G in the Y direction and 5) applying the acceleration of -2G in the Z direction, respectively.

With the mounted state of the electrostatic capacitance sensor 10 of the sensitivity inspection system 2000 shown in FIG. 8 regarded as the standard state, the value of the acceleration applied in each of the X, Y and Z directions in this state is regarded as 0G. Moreover, the sensitivity inspection system 2000 is regarded as being adjusted so that the value of the output with respect to each of the X, Y and Z directions in the standard state becomes zero.

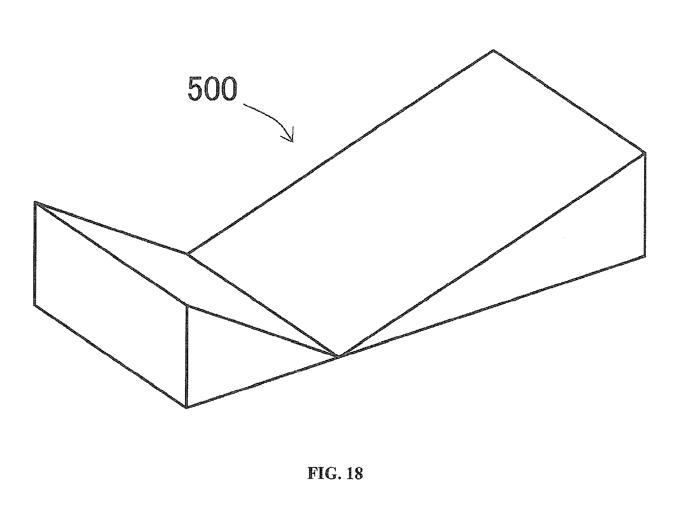

FIGURE 18 is a perspective view showing a setting stand 500 for setting the electrostatic capacitance sensor 10. The setting stand 500 may be provided as a part of the sensitivity inspection system 2000 or may be provided as a separate part from the sensitivity inspection system 2000.

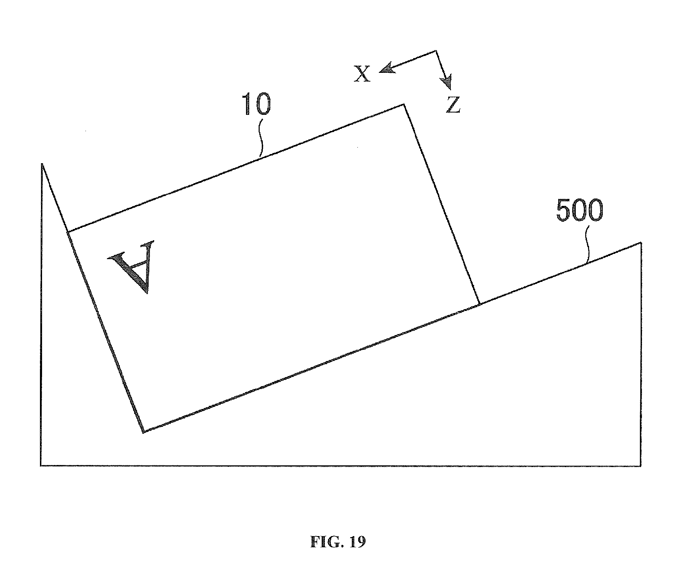

FIGURE 19 is a view showing an example of a state in which the electrostatic capacitance sensor 10 is set on the setting stand 500. In the case shown in the view, the component of a part of the gravitational acceleration is applied in each of two of the X and Z directions.

The inspection of the electrostatic capacitance sensor 10 is carried out by making a decision as to whether the value of each of the output from the first conversion unit 2040 and the output from the second conversion unit 2060 is within its own correct range or not. The decision may be made manually or may be made automatically by the sensitivity inspection system 2000. When the decision is made automatically, the sensitivity inspection system 2000 has the configuration explained in the section [Embodiment 2].

When the value of the output of the electrostatic capacitance sensor 10 is out of the correct range, the output of the electrostatic capacitance sensor 10 is adjusted. As was explained in the foregoing, in the electrostatic capacitance sensor 10 the example of which is shown in FIGS. 2 and 3, the correcting unit 300 multiplies the value, which the detecting unit 200 detects with respect to each direction, by a correction factor and the result of the multiplication is outputted. The correction factors are stored in the correction data storing unit 302 by direction.

Thus, by changing the value of each of the correction factors stored in the correction data storing unit 302 on the basis of the results of the inspection, the value of the output of the electrostatic capacitance sensor 10 with respect to each direction is adjusted. The calculation of the correction factor is carried out by similar procedures in any directions. Therefore, in the following, the calculation of the correction factor with respect to the first direction is presented as an example. Here, the initial-value of the correction factor with respect to each of the directions is taken as unity, which factor is stored in the correction data storing unit 302. In addition, let the value of the correction factor with respect to the first direction be $\alpha$.

Suppose that the value of the first converted output was $\Delta C$ which was calculated with respect to the electrostatic capacitance sensor 10 by the sensitivity inspection system 2000. In addition, suppose that the calculated value was out of the correct range with respect to the first direction. In this case, the correction factor $\alpha$ is calculated by using the following formula (8):

$$\alpha = \frac{avg}{\Delta C} \quad \cdots (8)$$

where avg is the averaged value of the upper limit value and the lower limit value of the first range indicating the correct range of the output of the electrostatic capacitance sensor 10 with respect to the acceleration in the first direction.

Then, the calculated value of α is stored in the correction data storing unit 302. By using the value, the value of the output of the electrostatic capacitance sensor 10 with respect to the first direction is adjusted, where α can be a correction factor that is capable of bringing the value of ΔC, which is out of the correct range, within the correct range. Thus, the calculation procedure thereof is not limited to the procedure using the formula (8).

The processing that calculates the value of α and the processing that stores the value of the calculated α in the correction data storing unit 302 may be automatically carried out by the sensitivity inspection system 2000, may be automatically carried out by a system other than the sensitivity inspection system 2000 or may be manually carried out.

The shape of the setting stand 500 is not limited to the shape shown in FIG. 18 but can be formed in such a shape as to have three surfaces with specified inclinations in all of the three of the X, Y and Z directions, respectively, to thereby apply specified acceleration to the electrostatic capacitance sensor 10 from each of the three directions. Specifically, the setting stand 500 may be formed so that none of the three surfaces becomes perpendicular to the ground when the electrostatic capacitance sensor 10 in the shape of a rectangular prism is set thereon.

In the setting stand 500 shown in FIG. 18, the electrostatic capacitance sensor 10 set thereon forms an angle fixed with the ground. The setting stand 500, however, may have a mechanism of varying the angle. The mechanism varying the angle may be a mechanism of manually varying the angle or may be a mechanism of automatically varying the angle so that the angle becomes the specified one.

To be exact, the magnitude of the gravitational acceleration differs depending on places. Therefore, it is preferable for the value of the gravitational acceleration used for the sensitivity inspection of the electrostatic capacitance sensor 10 to use the value of the gravitational acceleration measured by using a device calibrated beforehand at the place where the sensitivity inspection of the electrostatic capacitance sensor 10 is carried out (the place where the setting stand 500 is set up). This enables a highly accurate sensitivity inspection to be carried out regardless of the place where the sensitivity inspection is carried out. However, the value of the gravitational acceleration used for the sensitivity inspection of the electrostatic capacitance sensor 10 is not limited to the value measured at the place where the sensitivity inspection of the electrostatic capacitance sensor 10 is carried out.

In the foregoing, embodiments of the invention have been explained with reference to attached drawings. The embodiments, however, are examples of the invention and various configurations other than those described in the foregoing can be also adopted.

**Claims**

1. A sensitivity inspection system inspecting the sensitivity of an electrostatic capacitance sensor comprising:

a sensor unit comprising a movable electrode, at least one first fixed electrode arranged to be opposite to the movable electrode from a first direction taken as the direction opposing the movable electrode, and a second fixed electrode arranged to be opposite to the movable electrode from a second direction included in a plane the direction thereof being different from the direction of the plane including the first direction;
a detecting unit detecting first capacitance between the movable electrode and the first fixed electrode and second capacitance between the movable electrode and the second fixed electrode; and
a correcting unit correcting the result of detection by the detecting unit and outputting the corrected result,
the sensitivity inspection system comprising:

an output acquisition unit acquiring a first output with the value thereof based on the value of the first capacitance and a second output with the value thereof based on the value of the second capacitance from the electrostatic capacitance sensor made inclined to be brought in an inspection state;
a first conversion unit converting the first output to a first converted output with the value thereof equivalent to the value of the output when the first reference acceleration in the first direction is applied to the electrostatic capacitance sensor by multiplying the value of the first output by a first ratio as the ratio of the theoretical value of the output of the electrostatic capacitance sensor based on the value of the first capacitance when the first reference acceleration as the acceleration in the first direction with a specified value is applied as the reference acceleration for the inspection to the theoretical value of the output of the electrostatic capacitance sensor based on the value of the first capacitance when the acceleration in the first direction is applied in the inspection state; and

a second conversion unit converting the second output to a second converted output with the value thereof equivalent to the value of the output when the second reference acceleration in the second direction is applied to the electrostatic capacitance sensor by multiplying the value of the second output by a second ratio as the ratio of the theoretical value of the output of the electrostatic capacitance sensor based on the value of the second capacitance when the second reference acceleration as the acceleration in the second direction with a specified value is applied as the reference acceleration for the inspection to the theoretical value of the output of the electrostatic capacitance sensor based on the value of the second capacitance when the acceleration in the second direction is applied in the inspection state.

2. The sensitivity inspection system as claimed in claim 1 further comprising:

a first range acquisition unit acquiring a first range indicating the correct range of the value of the output of the electrostatic capacitance sensor based on the value of the first capacitance when the first reference acceleration in the first direction is applied;

a second range acquisition unit acquiring a second range indicating the correct range of the value of the output of the electrostatic capacitance sensor based on the value of the second capacitance when the second reference acceleration in the second direction is applied;

a first decision unit making a decision as to whether the value of the first converted output is included in the first range or not; and

a second decision unit making a decision as to whether the value of the second converted output is included in the second range or not.

3. The sensitivity inspection system as claimed in claim 1 or 2 wherein:

the electrostatic capacitance sensor is a sensor wherein:

at least the first fixed electrode of the first fixed electrode and the second fixed electrode in the sensor unit is formed of a pair of fixed electrodes of one fixed electrode opposing the one side of the movable electrode in the first direction and the other fixed electrode opposing the other side of the movable electrode in the first direction, and

the detecting unit detects the difference between the capacitance between the one of a pair of the fixed electrodes and the movable electrode and the capacitance between the other fixed electrode and the movable electrode as the first capacitance;

the first conversion unit calculates the theoretical value, which is the theoretical value $\Delta C$ of the output of the electrostatic capacitance sensor based on the value of the first capacitance when the acceleration in the first direction is applied, by a first theoretical formula expressed as

$$\Delta C = \varepsilon \cdot S_1 \cdot \frac{2((m/k) \cdot a)}{(d_0^{\,2} - ((m/k) \cdot a)^2)} \ [F] \cdots (4)$$

where $\varepsilon$ is the dielectric constant, $S_1$ is the area of the section where the movable electrode and each of the fixed electrode are opposite to each other, do is the initial spacing between the movable electrode and each of the fixed electrodes, m is the mass of the movable electrode, k is the spring constant of a spring supporting the movable electrode and a is acceleration applied in the first direction; and

the second conversion unit calculates the theoretical value, which is the theoretical value $\Delta C$ of the output of the electrostatic capacitance sensor based on the value of the second capacitance when the acceleration in the second direction is applied, by a second theoretical formula different from the first theoretical formula expressed as

$$\Delta C = \varepsilon \cdot S_3 \cdot \frac{(m/k_2) \cdot a}{d_0 \cdot (d_0 - (m/k_2) \cdot a)} \quad [F] \cdots (7)$$

where $\varepsilon$ is the dielectric constant, $S_3$ is the area of the section where the movable electrode and the fixed electrode are opposite to each other, do is the initial spacing between the movable electrode and the fixed electrodes, m is the mass of the movable electrode, k is the spring constant of a spring supporting the movable electrode and a is acceleration applied in the second direction.

4. The sensitivity inspection system as claimed in any one of claims 1 to 3 wherein each of the first reference acceleration and the second reference acceleration is acceleration that can be applied by using the gravitational acceleration.

5. The sensitivity inspection system as claimed in any one of claims 1 to 4 wherein the electrostatic capacitance sensor has a sensor unit detecting acceleration in each of at least three directions simultaneously.

6. The sensitivity inspection system as claimed in any one of claims 1 to 5 wherein the electrostatic capacitance sensor has a plurality of the sensor units each detecting acceleration in each of at most two directions.

7. The sensitivity inspection system as claimed in any one of claims 1 to 6 wherein the value of the gravitational acceleration is the value measured by a device calibrated beforehand at the place where the sensitivity inspection of the electrostatic capacitance sensor is carried out.

8. A sensitivity inspection method inspecting the sensitivity of an electrostatic capacitance sensor comprising:

a sensor unit comprising a movable electrode, at least one first fixed electrode arranged to be opposite to the movable electrode from a first direction taken as the direction opposing the movable electrode, and a second fixed electrode arranged to be opposite to the movable electrode from a second direction included in a plane the direction thereof being different from the direction of the plane including the first direction;
a detecting unit detecting first capacitance between the movable electrode and the first fixed electrode and second capacitance between the movable electrode and the second fixed electrode; and
a correcting unit correcting the result of detection by the detecting unit and outputting the corrected result,
the sensitivity inspection method comprising the steps of:

making the electrostatic capacitance sensor inclined to be brought in an inspection state;
acquiring a first output with the value thereof based on the value of the first capacitance and a second output with the value thereof based on the value of the second capacitance from the electrostatic capacitance sensor;
converting the first output to a first converted output with the value thereof corresponding to the value of the output when the first reference acceleration in the first direction is applied to the electrostatic capacitance sensor by multiplying the value of the first output by a first ratio as the ratio of the theoretical value of the output of the electrostatic capacitance sensor based on the value of the first capacitance when the first reference acceleration as the acceleration in the first direction with a specified value is applied as the reference acceleration for the inspection to the theoretical value of the output of the electrostatic capacitance sensor based on the value of the first capacitance when the acceleration in the first direction is applied in the inspection state,; and
converting the second output to a second converted output with the value thereof corresponding to the value of the output when the second reference acceleration in the second direction is applied to the electrostatic capacitance sensor by multiplying the value of the second output by a second ratio as the ratio of the theoretical value of the output of the electrostatic capacitance sensor based on the value of the second capacitance when the second reference acceleration as the acceleration in the second direction with a specified value is applied as the reference acceleration for the inspection to the theoretical value of the output of the electrostatic capacitance sensor based on the value of the second capacitance when the acceleration in the second direction is applied in the inspection state.

9. The sensitivity inspection method as claimed in claim 8 further comprising the steps of:

acquiring a first range indicating the correct range of the value of the output of the electrostatic capacitance sensor based on the value of the first capacitance when the first reference acceleration in the first direction is applied;

acquiring a second range indicating the correct range of the value of the output of the electrostatic capacitance sensor based on the value of the second capacitance when the second reference acceleration in the second direction is applied;

making a decision as to whether the value of the first converted output is included in the first range or not; and

making a decision as to whether the value of the second converted output is included in the second range or not.

**10.** The sensitivity inspection method as claimed in claim 8 or 9 wherein:

the electrostatic capacitance sensor is a sensor wherein:

at least the first fixed electrode of the first fixed electrode and the second fixed electrode in the sensor unit is formed of a pair of fixed electrodes of one fixed electrode opposing the one side of the movable electrode in the first direction and the other fixed electrode opposing the other side of the movable electrode in the first direction, and

the detecting unit detects the difference between the capacitance between the one of a pair of the fixed electrodes and the movable electrode and the capacitance between the other fixed electrode and the movable electrode as the first capacitance;

in the step of converting the first output to the first converted output, the theoretical value $\Delta C$ of the output of the electrostatic capacitance sensor based on the value of the first capacitance when the acceleration in the first direction applied is calculated by the first theoretical formula expressed as

$$\Delta C = \varepsilon \cdot S_1 \cdot \frac{2((m/k) \cdot a)}{(d_0^{\;2} - ((m/k) \cdot a)^2)} \; [F] \; \cdots (4)$$

where $\varepsilon$ is the dielectric constant, $S_1$ is the area of the section where the movable electrode and each of the fixed electrode are opposite to each other, do is the initial spacing between the movable electrode and each of the fixed electrodes, m is the mass of the movable electrode, k is the spring constant of a spring supporting the movable electrode and a is acceleration applied in the first direction; and

in the step of converting the second output to the second converted output, the theoretical value $\Delta C$ of the output of the electrostatic capacitance sensor based on the value of the second capacitance when the acceleration in the second direction is applied is calculated by a second theoretical formula different from the first theoretical formula expressed as

$$\Delta C = \varepsilon \cdot S_3 \cdot \frac{(m/k_2) \cdot a}{d_0 \cdot (d_0 - (m/k_2) \cdot a)} \; [F] \; \cdots (7)$$

where $\varepsilon$ is the dielectric constant, $S_3$ is the area of the section where the movable electrode and the fixed electrode are opposite to each other, do is the initial spacing between the movable electrode and the fixed electrodes, m is the mass of the movable electrode, k is the spring constant of a spring supporting the movable electrode and a is acceleration applied in the second direction.

**11.** The sensitivity inspection method as claimed in any one of claims 8 to 10 wherein each of the first reference acceleration and the second reference acceleration is acceleration that can be applied by using the gravitational acceleration.

**12.** The sensitivity inspection method as claimed in any one of claims 8 to 11 wherein the electrostatic capacitance sensor is a sensor detecting acceleration in each of at least three directions simultaneously.

**13.** The sensitivity inspection method as claimed in any one of claims 8 to 12 wherein the electrostatic capacitance sensor is a sensor having a plurality of the sensor units each detecting acceleration in each of at most two directions.

**14.** The sensitivity inspection system as claimed in any one of claims 8 to 13 wherein the value of the gravitational acceleration is the value measured by a device calibrated beforehand at the place where the sensitivity inspection of the electrostatic capacitance sensor is carried out.

2000

SENSITIVITY INSPECTION
SYSTEM

2020

OUTPUT ACQUISITION
UNIT

2040

FIRST CONVERSION
UNIT

2060

SECOND
CONVERSION
UNIT

FIG. 1

FIG. 2

**FIG. 3**

FIG. 4

EP 2 933 608 A1

FIG. 5

24

FIG. 6

25

EP 2 933 608 A1

FIG. 7

26

FIG. 8

X

Z

10

ACCELERATION IN X DIRECTION
= GRAVITATIONAL ACCELERATION $\times \sin \theta$

$\theta$

ACCELERATION IN Z DIRECTION
= GRAVITATIONAL ACCELERATION $\times \cos \theta$

GRAVITATIONAL ACCELERATION

FIG. 9

SENSOR OUTPUT
$\triangle C$

$\triangle C = f(a)$

f(b1)

f(g1)

g1     b1     a

ACCELERATION

FIG. 10

$$d1 = d0 - \Delta d$$
$$d2 = d0 + \Delta d$$

FIG. 11

$$d3 = d0 - \Delta d2$$

FIG. 12

2000

SENSITIVITY INSPECTION
SYSTEM

1020

BUS

PROCESSOR

MEMORY

1040     1060

1080

STORAGE

1220

OUTPUT ACQUISITION
MODULE

1240

FIRST CONVERSION
MODULE

1240

SECOND CONVERSION
MODULE

FIG. 13

Start

ACQUIRE FIRST OUTPUT AND SECOND OUTPUT FROM ELECTROSTATIC CAPACITANCE SENSOR IN INSPECTION STATE — S102

CONVERT FIRST OUTPUT VALUE TO FIRST CONVERTED OUTPUT VALUE — S104

CONVERT SECOND OUTPUT VALUE TO SECOND CONVERTED OUTPUT VALUE — S106

End

FIG. 14

2000

SENSITIVITY INSPECTION
SYSTEM

2020

OUTPUT ACQUISITION
UNIT

2040

FIRST CONVERSION
UNIT

2060

SECOND
CONVERSION
UNIT

2120

FIRST DECISION
UNIT

2140

SECOND DECISION
UNIT

2080

FIRST RANGE
ACQUISITION UNIT

2100

SECOND RANGE
ACQUISITION UNIT

FIG. 15

```
                    ┌─────────────────────┐
                    │        Start        │
                    └─────────────────────┘
                               │
    ┌──────────────────────────────────────────────────┐
    │ ACQUIRE FIRST OUTPUT AND SECOND OUTPUT            │  ⌐~ S102
    │ FROM ELECTROSTATIC CAPACITANCE SENSOR             │
    │ IN INSPECTION STATE                               │
    └──────────────────────────────────────────────────┘
                               │
    ┌──────────────────────────────────────────────────┐
    │ CONVERT FIRST OUTPUT VALUE TO FIRST              │  ⌐~ S104
    │ CONVERTED OUTPUT VALUE                            │
    └──────────────────────────────────────────────────┘
                               │
    ┌──────────────────────────────────────────────────┐
    │ CONVERT SECOND OUTPUT VALUE TO                    │  ⌐~ S106
    │ SECOND CONVERTED OUTPUT VALUE                     │
    └──────────────────────────────────────────────────┘
                               │
    ┌──────────────────────────────────────────────────┐
    │            ACQUIRE FIRST RANGE                    │  ⌐~ S202
    └──────────────────────────────────────────────────┘
                               │
    ┌──────────────────────────────────────────────────┐
    │            ACQUIRE SECOND RANGE                   │  ⌐~ S204
    └──────────────────────────────────────────────────┘
                               │
    ┌──────────────────────────────────────────────────┐
    │ MAKE DECISION AS TO WHETHER FIRST                │  ⌐~ S206
    │ CONVERTED OUTPUT VALUE IS WITHIN                  │
    │ FIRST RANGE OR NOT                               │
    └──────────────────────────────────────────────────┘
                               │
    ┌──────────────────────────────────────────────────┐
    │ MAKE DECISION AS TO WHETHER SECOND               │  ⌐~ S208
    │ CONVERTED OUTPUT VALUE IS WITHIN                  │
    │ SECOND RANGE OR NOT                              │
    └──────────────────────────────────────────────────┘
                               │
                    ┌─────────────────────┐
                    │         End         │
                    └─────────────────────┘
```

FIG. 16

600

602 604 606 608

| DIRECTION | ACCELERATION | CORRECT LOWER LIMIT VALUE | CORRECT UPPER LIMIT VALUE |
|-----------|--------------|---------------------------|---------------------------|
| X | +1G | L1 | U1 |
| X | −1G | L2 | U2 |
| Y | +1G | L3 | U3 |
| Y | −1G | L4 | U4 |
| Z | −2G | L5 | U5 |

FIG. 17

500

FIG. 18

FIG. 19

Europäisches
Patentamt

European
Patent Office

Office européen
des brevets

## EUROPEAN SEARCH REPORT

Application Number

EP 15 16 0535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 506 539 A1 (ASKEY TECHNOLOGY JIANGSU LTD [CN]; ASKEY COMPUTER CORP [TW]) 3 October 2012 (2012-10-03) * paragraph [0009] - paragraph [0010] * * paragraph [0015] * * paragraph [0018] * * figures 1,2,5 * | 1,8 | INV. G01C25/00 G01P15/125 G01P15/18 G01P21/00 |
| A | EP 2 284 546 A2 (RESEARCH IN MOTION LTD [CA]) 16 February 2011 (2011-02-16) * paragraph [0002] - paragraph [0003] * * paragraph [0043] * * figure 4 * | 1,8 | |
| A | US 2011/301902 A1 (PANAGAS PETER [US]) 8 December 2011 (2011-12-08) * paragraph [0008] * * paragraph [0033] - paragraph [0034] * * paragraph [0058] * * figure 11 * | 1,8 | |

TECHNICAL FIELDS SEARCHED (IPC)

G01P
G01C
G01D
G01L

The present search report has been drawn up for all claims

| Place of search | Date of completion of the search | Examiner |
|---|---|---|
| Munich | 12 June 2015 | Robinson, Mark |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

&: member of the same patent family, corresponding
     document

EPO FORM 1503 03.82 (P04C01)

39

## ANNEX TO THE EUROPEAN SEARCH REPORT
## ON EUROPEAN PATENT APPLICATION NO.

EP 15 16 0535

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2015

| Patent document cited in search report | | Publication date | Patent family member(s) | | Publication date |
|---|---|---|---|---|---|
| EP 2506539 | A1 | 03-10-2012 | CA | 2752939 A1 | 01-10-2012 |
| | | | CN | 102735283 A | 17-10-2012 |
| | | | EP | 2506539 A1 | 03-10-2012 |
| | | | TW | 201241449 A | 16-10-2012 |
| | | | US | 2012247176 A1 | 04-10-2012 |
| EP 2284546 | A2 | 16-02-2011 | AT | 557280 T | 15-05-2012 |
| | | | CA | 2711406 A1 | 30-01-2011 |
| | | | EP | 2284546 A2 | 16-02-2011 |
| | | | US | 2011029275 A1 | 03-02-2011 |
| | | | US | 2013263642 A1 | 10-10-2013 |
| US 2011301902 | A1 | 08-12-2011 | NONE | | |

EPO FORM P0459

For more details about this annex : see Official Journal of the European Patent Office, No. 12/82

**EP 2 933 608 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006153754 A
- JP 9251031 A
- JP 2006016671 A
- JP 2004093552 A
- JP 8240611 A